# FASCICULE DE BREVET EUROPEEN

(11) **EP 1 443 265 B1**
(45) Date de publication et mention de la délivrance du brevet: **05.08.2009**
(21) Numéro de dépôt: 04290185.0
(22) Date de dépôt: 23.01.2004
(51) Int. Cl.: F21S 8/10, B60Q 1/00, F21V 8/00

(54) **Guide de lumière équipé de reflecteurs**
Lichtleiter mit Reflektoren
Light guide provided with reflectors

(30) Priorité: 30.01.2003 FR 0301082
(43) Date de publication de la demande: 04.08.2004
(73) Titulaire: VALEO VISION, 93012 Bobigny Cedex (FR)
(72) Inventeur: De Lamberterie, Antoine, 75019 Paris (FR)

(56) Documents cités:
- EP-A- 1 036 979
- EP-A- 1 078 816
- EP-A- 1 243 467
- DE-A- 10 055 561
- DE-A- 19 831 002
- US-A- 5 295 047
- US-A- 6 123 442

## Description

L'invention concerne un dispositif d'éclairage ou de signalisation, notamment pour véhicule automobile, qui comprend un guide de lumière et une source lumineuse.

L'invention concerne plus particulièrement un dispositif d'éclairage ou de signalisation, notamment pour véhicule automobile, qui comprend :
- un guide de lumière linéaire dont au moins un tronçon est engendré par le déplacement d'une section élémentaire transversale verticale globalement circulaire selon une ligne directrice, comprenant une portion périphérique avant d'éclairage et une portion périphérique arrière qui comporte un segment arrière de diffusion de la lumière ; et
- une source lumineuse émettant des rayons lumineux qui pénètrent dans le guide de lumière par au moins une face d'extrémité de façon à être canalisés par le guide de lumière.

Il est courant de rassembler dans un seul boîtier plusieurs fonctions d'éclairage ou de signalisation du véhicule automobile, de manière à simplifier le câblage électrique de ces différentes fonctions.

Chaque fonction comporte une source lumineuse, un réflecteur et éventuellement une glace, ces différents éléments étant agencés de façon à fournir un faisceau d'éclairage ou de signalisation dont les caractéristiques géométriques et photométriques doivent être conformes à différentes réglementations. Chaque fonction nécessite ainsi un volume minimal pour son implantation dans un dispositif d'éclairage ou de signalisation particulier.

Cependant, le volume disponible pour implanter des dispositifs d'éclairage ou de signalisation est de plus en plus réduit, aussi bien à l'avant qu'à l'arrière du véhicule automobile. En effet, les contraintes de l'aérodynamique et les conceptions des stylistes conduisent à des formes très différentes de celles qui résultent uniquement des considérations techniques.

Ainsi, dans de nombreux cas, l'espace disponible pour regrouper des fonctions dans un même boîtier est insuffisant, et il est alors nécessaire de répartir les différentes fonctions dans des boîtiers différents, d'où un accroissement du coût et une augmentation du temps de câblage et de montage.

Afin de résoudre ce problème, il est connu d'utiliser des guides de lumière. On connaît par exemple du document EP-A-1 243 467, un projecteur comportant un module elliptique. Un guide de lumière circulaire entoure la lentille du module elliptique, et comporte une surface de découplage de la lumière coopérant avec un réflecteur cylindrique et un réflecteur annulaire pour diriger les rayons issus du guide de lumière vers l'avant. Une telle disposition a pour but d'augmenter la surface apparente du module elliptique.

On connaît encore, du document EP-A-1 036 979, un guide de lumière muni d'une ligne de micro gravures sur sa face arrière, un réflecteur étant disposé en arrière de ce guide de lumière, la ligne de micro gravures étant placée sensiblement au foyer du réflecteur. Un tel guide de lumière est destiné à être associé à d'autres guides de lumière identiques disposés côte à côte pour former une surface émettrice de lumière.

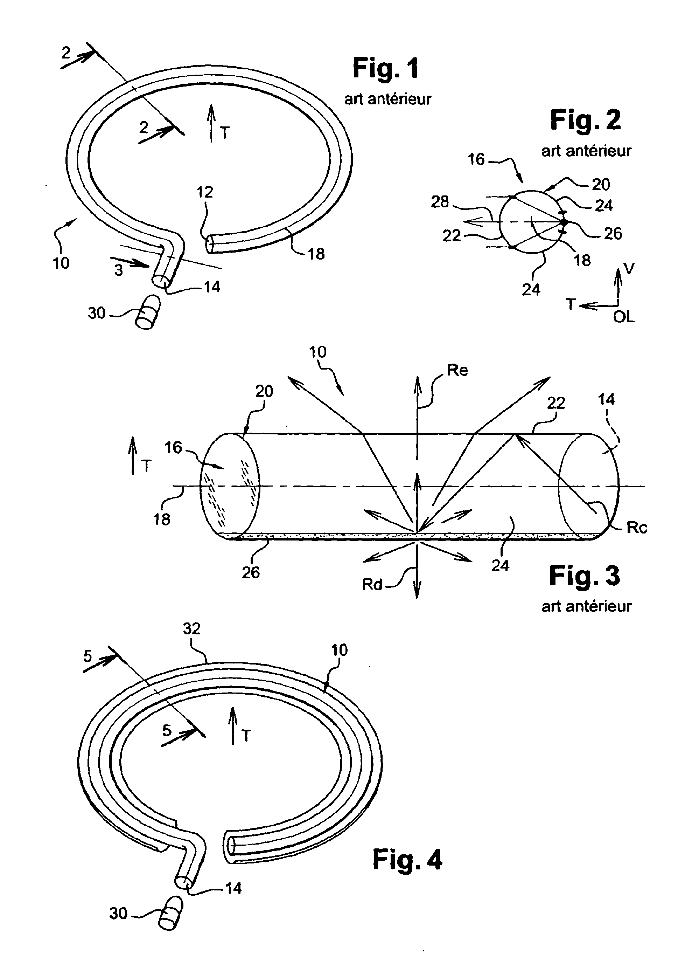

Un autre guide de lumière réalisé selon l'état de la technique est représenté aux figures 1 à 3.

Le guide de lumière 10 comporte ici deux extrémités 12 et 14. Le guide de lumière 10 est notamment destiné à canaliser des rayons lumineux qui pénètrent par ses extrémités 12 ou 14.

Le guide de lumière 10 est obtenu par le déplacement d'une section élémentaire 16 transversale globalement circulaire le long d'une ligne directrice 18. La ligne directrice 18 est ici située sensiblement au centre de la section élémentaire 16, et la section élémentaire 16 est perpendiculaire à la ligne directrice 18.

La forme de la ligne directrice 18 est définie librement par l'homme du métier notamment en fonction des contraintes esthétiques. Comme représenté à la figure 1, la ligne directrice 18 a ici une forme de boucle.

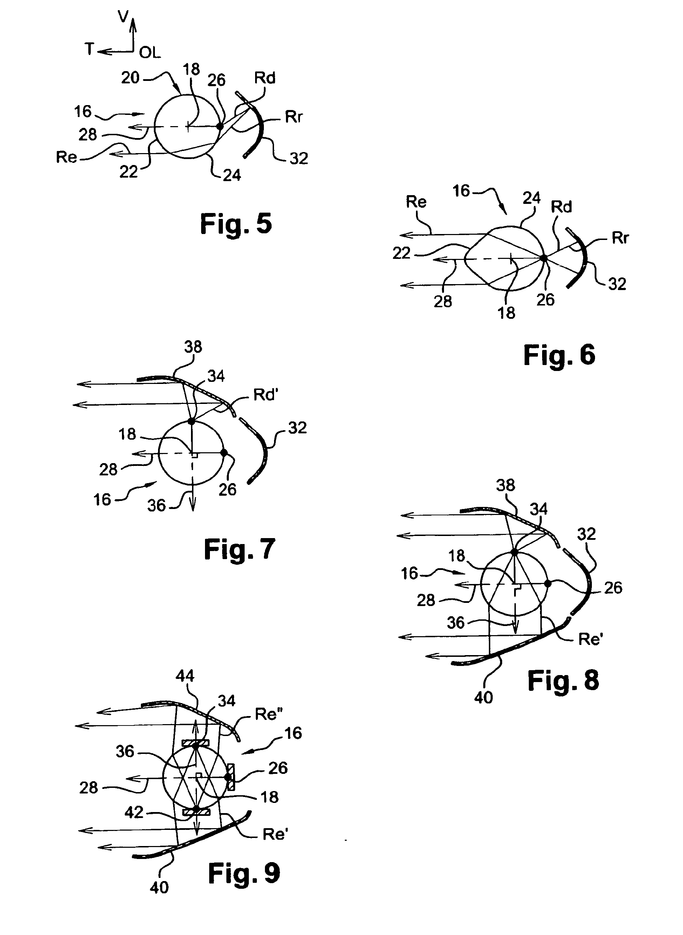

Dans la description qui va suivre, on adoptera, à titre non limitatif, une orientation longitudinale, verticale et transversale qui est indiquée par le trièdre L, V, T des figures 2 et 5, et qui s'appliquera localement à toutes les sections élémentaires 16 du guide de lumière 10. Ainsi la direction longitudinale L est toujours perpendiculaire à chacune des sections élémentaires 16, quelle que soit la forme globale du guide de lumière 10. Ainsi, la direction verticale V telle que définie est susceptible de varier par rapport à un référentiel lié par exemple au véhicule automobile selon la forme de la ligne directrice 18.

Par convention, la direction transversale T est orientée de l'arrière, à droite des figures 2 et 5 à 9, vers l'avant à gauche des figures 2 et 5 à 9. Dans les exemples représentés aux figures 1, 3 et 4, la direction transversale T est fixe par rapport à un référentiel lié au véhicule automobile, et elle est indiquée par la flèche T des figures 1, 3 et 4.

Comme illustrée à la figure 2, le contour 20 de la section élémentaire 16 comporte une portion périphérique avant 22 d'éclairage, et une portion périphérique arrière 24.

La portion périphérique arrière 24 comporte un segment arrière 26 de diffusion de la lumière. La longueur du segment arrière 26 étant petite par rapport au diamètre de la section élémentaire 16, le segment arrière 26 sera considéré comme un point dans la suite de la description. Un axe optique principal 28 s'étend transversalement depuis le segment arrière de diffusion 26 jusqu'à la portion avant d'éclairage 22.

Comme représenté à la figure 3, l'ensemble des segments arrières de diffusion 26 crée une ligne arrière de diffusion de lumière qui s'étend parallèlement à la ligne directrice 18 sur au moins un tronçon du guide de lumière 10.

Les rayons lumineux pénètrent dans le guide de lumière 10 par au moins une de ses extrémités 12 ou 14. Les rayons lumineux sont ici émis par une source lumineuse, par exemple une diode électroluminescente 30, aussi appelée « LED », qui est située en regard de l'extrémité 14.

Afin de canaliser la lumière, le guide de lumière 10 est constitué d'une matière transparente telle que du verre ou du plastique, qui a un indice de réfraction plus élevé que le milieu dans lequel est immergé le guide de lumière 10, notamment l'air.

Comme représenté à la figure 3, les rayons lumineux Rc pénétrant par l'extrémité 14 du guide de lumière 10 sont canalisés à l'intérieur du guide de lumière 10 par des réflexions totales successives sur le contour 20 des sections élémentaires 16, qui sont dues à la différence d'indices de réfraction entre l'air et le guide de lumière 10, selon la direction générale de la ligne directrice 18.

Lorsque ces rayons canalisés Rc atteignent le segment arrière 26 de diffusion, ils sont diffusés dans toutes les directions et notamment :
- vers l'arrière, les rayons ainsi diffusés Rd émergent alors à l'extérieur du guide de lumière 10 ;
- et vers l'avant à l'intérieur du guide de lumière 10.

Les rayons Re diffusés vers l'avant qui sont compris dans un angle solide déterminé autour de l'axe optique principal 28 atteignent la portion avant d'éclairage 22 du guide de lumière 10 avec un angle d'incidence tel qu'ils sont réfractés, et qu'ils émergent ainsi à l'extérieur du guide de lumière 10.

La portion avant d'éclairage 22 réalise ainsi la fonction d'éclairage ou de signalisation requise pour le véhicule automobile.

Un tel guide de lumière 10 permet de réaliser une fonction d'éclairage ou de signalisation répondant aux contraintes de style et d'encombrement du véhicule.

Cependant, une partie non négligeable de la lumière est diffusée vers l'arrière du guide de lumière 10 comme indiqué par les rayons Rd à la figure 3. Ainsi, la lumière projetée vers l'avant par le guide de lumière 10 n'a pas une intensité optimale par rapport à l'intensité lumineuse entrant par la face d'extrémité 14 du guide de lumière 10.

Afin de remédier à ces problèmes, l'invention propose un dispositif d'éclairage ou de signalisation du type décrit précédemment caractérisé en ce qu'il comporte au moins un réflecteur qui redirige vers l'avant les rayons lumineux qui émergent de la section élémentaire par sa portion périphérique arrière.

Selon d'autres caractéristiques de l'invention :
- le dispositif comporte un réflecteur arrière qui est situé en regard du segment arrière de diffusion suivant l'axe optique principal et qui réfléchit vers l'intérieur de la section élémentaire les rayons diffusés vers l'arrière de façon qu'ils soient réfractés à travers la portion périphérique avant ;
- dans un plan perpendiculaire à la ligne directrice, le réflecteur arrière a une forme telle que les rayons émis par le segment arrière de diffusion de la lumière qu'il réfléchit sont réfractés par la section élémentaire de façon à émerger de la portion périphérique avant sensiblement parallèlement à l'axe optique principal ;
- le réflecteur arrière réfléchit les rayons diffusés vers l'arrière de façon convergente vers le segment arrière de diffusion ;
- le réflecteur arrière a une section élémentaire transversale verticale en forme d'arc de cercle dont le centre est agencé globalement sur le segment arrière de diffusion ;
- le réflecteur arrière est constitué d'une couche de matière réfléchissante qui recouvre la surface externe du segment arrière de diffusion ;
- la portion périphérique avant forme un dioptre convergent dont le foyer objet est globalement agencé sur le segment arrière de diffusion ;
- la portion périphérique arrière de la section élémentaire comporte un segment latéral supérieur de diffusion de la lumière qui définit un axe optique secondaire s'étendant dans la section élémentaire du guide de lumière depuis le segment latéral supérieur de diffusion vers le bas, et qui diffuse vers le bas à l'intérieur du tronçon et vers le haut à l'extérieur du tronçon les rayons lumineux canalisés ; et le système optique comporte un réflecteur latéral supérieur qui est situé au-dessus de la section élémentaire en regard du segment latéral supérieur de diffusion suivant l'axe optique secondaire de façon à réfléchir les rayons diffusés vers le haut par le segment latéral supérieur globalement vers l'avant ;
- l'axe optique secondaire est sensiblement vertical et perpendiculaire à l'axe optique principal ;
- le réflecteur latéral supérieur a une forme parabolique dont le foyer objet est agencé sur le segment latéral supérieur de diffusion de façon à réfléchir vers l'avant selon une direction sensiblement parallèle à l'axe optique principal les rayons diffusés vers le haut ;
- le dispositif comporte un réflecteur latéral inférieur qui est situé sous la section élémentaire dans l'alignement de l'axe optique secondaire, et qui réfléchit vers l'avant et parallèlement à l'axe optique principal les rayons qui sont diffusés vers le bas par le segment latéral de diffusion et réfractés par la portion périphérique arrière ;
- la portion périphérique arrière comporte une partie inférieure en forme de dioptre dont le foyer image correspond sensiblement au segment latéral supérieur de diffusion de façon que les rayons diffusés vers le bas émergent parallèlement à l'axe optique secondaire ;
- la portion périphérique arrière de la section élémentaire comporte un premier segment latéral supérieur de diffusion et un second segment latéral inférieur de diffusion, qui définissent un axe optique secondaire s'étendant depuis le premier segment latéral supérieur de diffusion jusqu'au second segment latéral inférieur de diffusion de façon globalement verticale ; et les surfaces externes des premier et second segments latéraux de diffusion sont recouvertes d'une matière réfléchissante de façon que les rayons soient diffusés par les segments latéraux de diffusion selon la direction générale de l'axe optique secondaire vers l'intérieur de la section élémentaire ; et les parties de la portion périphérique opposées à chacun des segments latéraux de diffusion ont la forme de dioptres dont le foyer objet correspond sensiblement au segment latéral de diffusion opposé de façon que les rayons lumineux émergent du guide de lumière parallèlement à l'axe optique secondaire ; et le dispositif comporte deux réflecteurs latéraux qui sont situés respectivement au-dessous et au-dessus de la section élémentaire en regard des segments latéraux, et qui réfléchissent lesdits rayons lumineux émergents globalement vers l'avant.

D'autres caractéristiques et avantages de l'invention apparaîtront au cours de la lecture de la description détaillée qui va suivre, pour la compréhension de laquelle on se reportera aux dessins annexés parmi lesquels :
- la figure 1 est une vue en perspective qui représente un guide de lumière réalisé selon une conception connue ;
- la figure 2 est une vue en section selon le plan de coupe 2-2 de la figure 1 qui représente une section élémentaire transversale verticale du guide de lumière ;
- la figure 3 est une vue à grande échelle qui représente une partie du guide de lumière indiquée par la flèche 3 de la figure 1 ;
- la figure 4 est une vue en perspective qui représente un dispositif d'éclairage ou de signalisation réalisé selon les enseignements de l'invention qui comporte principalement le guide de lumière de la figure 1 et un réflecteur ;
- la figure 5 est une vue en section selon le plan de coupe 5-5 de la figure 4 sur laquelle le parcours des rayons lumineux est représenté par des lignes continues ;
- la figure 6 est une vue similaire à celle de la figure 5 qui représente un deuxième mode de réalisation du dispositif d'éclairage ou de signalisation ;
- la figure 7 est une vue similaire à celle de la figure 5 qui représente un troisième mode de réalisation du dispositif d'éclairage ou de signalisation ;
- la figure 8 est une vue similaire à celle de la figure 5 qui représente un quatrième mode de réalisation du dispositif d'éclairage ou de signalisation ;
- la figure 9 est une vue similaire à celle de la figure 5 qui représente un cinquième mode de réalisation du dispositif d'éclairage ou de signalisation.

On a représenté à la figure 4 un dispositif d'éclairage ou de signalisation réalisé selon les enseignements de l'invention. Ce dispositif comporte le guide de lumière 10 décrit en préambule de cette description, et un réflecteur arrière 32.

Le volume du dispositif d'éclairage ou de signalisation étant engendré par le déplacement d'une section élémentaire transversale verticale du dispositif selon la ligne directrice 18, on ne décrira dans la suite de la description que la section élémentaire transversale verticale du dispositif d'éclairage ou de signalisation.

On a représenté à la figure 5, la section élémentaire transversale verticale 16 du guide de lumière 10 de la figure 1.

Le contour 20 de la section élémentaire 16 comporte notamment la portion périphérique avant 22 et la portion périphérique arrière 24. La portion 22 remplit la fonction d'éclairage ou de signalisation requise pour le véhicule automobile.

La portion périphérique arrière comporte le segment arrière de diffusion de lumière 26 à partir duquel s'étend transversalement vers l'avant l'axe optique 28. L'axe optique principal 28 coupe la section élémentaire 16 en deux parties supérieure et inférieure globalement symétriques.

Selon les enseignements de l'invention, le réflecteur arrière 32 est situé à l'arrière de la section élémentaire 16 en regard du segment arrière de diffusion 26 suivant l'axe optique 28.

Lors du fonctionnement du dispositif d'éclairage ou de signalisation, les rayons lumineux canalisés dans le guide de lumière 10 qui atteignent le segment arrière de diffusion 26 sont diffusés notamment vers l'arrière du dispositif d'éclairage. Les rayons diffusés vers l'arrière du segment 26 sont indiqués par la référence Rd à la figure 5.

Ces rayons diffusés Rd atteignent la surface réfléchissante du réflecteur arrière 32 qui renvoie des rayons réfléchis Rr globalement vers l'avant en direction de la portion périphérique arrière 24 du guide de lumière 10.

Ces rayons réfléchis Rr sont réfractés une première fois en pénétrant à l'intérieur de la section élémentaire 16 par la portion périphérique arrière 24, puis ils sont réfractés une seconde fois en émergeant de la section élémentaire 16 par la portion périphérique avant d'éclairage 22. Les rayons qui émergent de la portion périphérique avant d'éclairage 22 sont référencés Re.

De manière non limitative, la forme du réflecteur arrière 32 est ici conçue par l'homme du métier de façon que les rayons émergents Re soient sensiblement parallèles à l'axe optique principal 28. L'homme du métier est libre d'adapter la forme du réflecteur arrière 32 de façon que les rayons Re émergent avec une répartition voulue autour de l'axe optique principal 28.

Selon un deuxième mode de réalisation représenté à la figure 6, la portion périphérique avant d'éclairage 22 de la section élémentaire 16 a la forme d'un dioptre convergent.

Selon une conception connue, l'axe focal du dioptre convergent 22 est ici confondu sensiblement avec l'axe optique principal 28, et son foyer objet est agencé sensiblement au segment arrière de diffusion 26. Ainsi, les rayons diffusés vers l'avant jusqu'à la portion périphérique avant d'éclairage 22 par le segment arrière de diffusion 26, sont réfractés de façon à émerger de la section élémentaire 16 de façon globalement parallèle à l'axe optique principal 28.

Selon les enseignement de l'invention, le réflecteur arrière 32 a ici une section globalement en forme d'arc de cercle dont le centre optique est agencé sensiblement sur le segment arrière de diffusion 26.

Ainsi, les rayons Rd diffusés vers l'arrière par le segment arrière de diffusion 26 atteignent le réflecteur arrière 32, puis ils sont réfléchis vers le centre optique, c'est-à-dire au segment arrière de diffusion 26, de façon qu'une partie des rayons réfléchis Rr par le réflecteur arrière 32 soit rediffusée vers l'avant à travers la portion avant d'éclairage 22, les rayons émergents Re sont ainsi globalement parallèles à l'axe optique principal 28.

L'homme du métier est libre de concevoir la forme de la portion périphérique avant d'éclairage 22 de façon à orienter les rayons émergents Re avec l'angle et la dispersion voulue autour de l'axe optique principal 28.

Selon une variante non représentée, le réflecteur arrière 32 est constitué par une couche de matière réfléchissante appliquée à la face extérieure du segment de diffusion de lumière 26. Ainsi, le dispositif d'éclairage fonctionne de manière analogue au deuxième mode de réalisation représenté à la figure 6. La matière réfléchissante utilisée est par exemple de l'aluminium.

Selon un troisième mode de réalisation de l'invention représenté à la figure 7, la section élémentaire 16 du guide de lumière 10 comporte un second segment latéral de diffusion de la lumière 34.

De manière non limitative, ce segment 34 est ici situé sur une partie supérieure de la portion périphérique arrière 24 selon la figure 7. On le nommera donc segment latéral supérieur 34 dans la suite de la description.

Ce segment supérieur de diffusion 34 définit un axe optique secondaire 36 qui s'étend sensiblement de haut en bas à travers la section élémentaire 16 depuis le segment supérieur de diffusion 34. L'axe optique secondaire 36 divise ici la section élémentaire 16 en deux moitiés sensiblement symétriques.

Avantageusement, comme représenté à la figure 7, l'axe optique secondaire 36 est sensiblement vertical, et il est perpendiculaire à l'axe optique principal 28.

Le dispositif d'éclairage comporte un réflecteur latéral supérieur 38 associé au segment latéral supérieur 34. Le réflecteur latéral supérieur 38 est situé au-dessus de la section élémentaire 16, en regard du segment supérieur 34 suivant l'axe optique secondaire 36.

Le segment supérieur de diffusion de la lumière 34 a, sur les rayons lumineux canalisés, un effet analogue à celui du segment arrière de diffusion de la lumière 26.

Ainsi, lorsque les rayons canalisés atteignent le segment latéral supérieur 34, ils sont diffusés notamment vers le haut à l'extérieur de la section élémentaire 16, et vers le bas à l'intérieur de la section élémentaire 16.

Le réflecteur supérieur 38 a une forme d'arc de parabole dont le foyer objet est agencé sensiblement sur le segment latéral supérieur de diffusion de lumière 34. Le réflecteur 38 est orienté de façon que les rayons Rd' diffusés vers le haut en direction du réflecteur supérieur 38 soient réfléchis selon une direction sensiblement parallèle à l'axe optique principal 28 par le réflecteur supérieur 38.

Il est possible de combiner ce troisième mode de réalisation avec l'un quelconque des deux premiers modes de réalisation ou leurs variantes, par exemple avec le premier mode de réalisation, comme illustré à la figure 7.

Selon une variante non représentée de la combinaison représentée à la figure 7, le réflecteur arrière 32 et le réflecteur supérieur 38 sont réalisés d'une seule pièce.

Selon un quatrième mode de réalisation de l'invention représenté à la figure 8, le dispositif d'éclairage réalisé selon le mode précédent comporte un réflecteur latéral inférieur 40 qui est situé sous la section élémentaire 16 sensiblement en regard de l'axe optique secondaire 36.

Ce réflecteur latéral inférieur 40 est destiné à réfléchir sensiblement vers l'avant les rayons Re' qui sont diffusés vers le bas par le segment supérieur 34, puis qui sont réfractés en passant à travers une partie inférieure de la portion périphérique arrière 34 de la section élémentaire 16.

Selon l'exemple représenté à la figure 8, la partie de la portion périphérique arrière 24 à travers laquelle les rayons diffusés vers le bas sont réfractés, a la forme d'un dioptre convergent dont le foyer objet est agencé sensiblement au segment supérieur de diffusion 34.

Ainsi, les rayons lumineux Re' diffusés vers le bas par le segment supérieur 34 sont réfractés à travers la portion périphérique arrière de façon à émerger de manière sensiblement parallèle à l'axe optique secondaire 36.

Le réflecteur latéral inférieur 40 a ici une forme globalement parabolique dont le foyer est confondu avec l'image du segment supérieur 34 dans le dioptre constitué par la partie inférieure de la portion périphérique arrière 24, et il est orienté de façon que les rayons réfractés vers le bas soient réfléchis vers l'avant de façon sensiblement parallèle à l'axe optique principal 28.

Selon une variante non représentée de l'invention, le réflecteur supérieur 38, le réflecteur inférieur 40 et le réflecteur arrière 32 sont réalisés d'une seule pièce.

Selon une variante non représentée des troisième et quatrième modes de réalisation, le segment latéral de diffusion 34 est situé sur une partie inférieure de la portion périphérique arrière 24. Cette inversion de la position du segment latéral de diffusion 34 ne modifie pas le fonctionnement global du dispositif d'éclairage ou de signalisation. Ce qui a été décrit précédemment est donc applicable à cette variante à une symétrie par rapport à l'axe optique principal 28 près.

Selon un cinquième mode de réalisation qui est représenté à la figure 9, et qui est combinable avec les deux premiers modes de réalisations et leurs variantes, la section élémentaire 16 comporte un segment supérieur de diffusion 34 et un segment inférieur de diffusion 42.

Le segment inférieur de diffusion de la lumière 42 est situé sur la face externe de la portion périphérique arrière 24 à l'intersection avec l'axe optique secondaire 36 tel que défini précédemment, c'est-à-dire verticale et diamétral par rapport à la section élémentaire 16. Ainsi, le segment supérieur 34 et le segment inférieur 42 sont en vis-à-vis l'un de l'autre.

Chacun de ces segments latéraux 34 et 42 sont recouverts d'une matière réfléchissante, par exemple de l'aluminium. La lumière est ainsi diffusée exclusivement vers l'intérieur de la section élémentaire 16, c'est-à-dire, vers le bas par le segment supérieur 34, et vers le haut par le segment inférieur 42.

Le dispositif d'éclairage comporte aussi deux réflecteurs latéraux inférieur 40 et supérieur 44. Ils sont destinés à réfléchir vers l'avant les rayons lumineux Re' et Re" respectivement diffusés vers l'intérieur de la section élémentaire 16 par les deux segments latéraux 34 et 42, puis réfractés par la portion périphérique arrière de la section élémentaire 16.

Dans l'exemple illustré à la figure 9, le segment arrière de diffusion 26 est ici recouvert d'une matière réfléchissante telle que par exemple l'aluminium.

Les parties supérieure et inférieure de la portion périphérique arrière 24 ont ici la forme de dioptres convergents de manière à réfracter la lumière diffusée par les segments 34 et 42 de manière sensiblement parallèle à l'axe optique secondaire 36.

Des réflecteurs latéraux 40 et 44 ont globalement une forme parabolique dont le foyer est respectivement confondu avec l'image du segment supérieur 34 et inférieur 42 dans le dioptre constitué respectivement par la partie inférieur et supérieur de la portion périphérique arrière 24, et ils sont orientés de manière à réfléchir vers l'avant et parallèlement à l'axe optique principal 28 les rayons réfractés par la portion périphérique arrière 24.

Selon un autre mode de réalisation de l'invention non représenté, la réflexion des rayons diffusés vers l'arrière par le segment arrière 26 est réalisée selon l'un des deux premiers modes de réalisation. Les réflecteurs supérieur 44, inférieur 40 et arrière 32 sont alors réalisés d'une seule pièce.

Selon une variante non représentée du cinquième mode de réalisation, Le guide de lumière 10 ne comporte qu'un segment latéral de diffusion 34 ou 42, et un seul réflecteur associé respectivement 40 ou 44.

La présente invention permet donc d'augmenter l'intensité de la lumière émise par le dispositif d'éclairage vers l'avant en augmentant, d'une part, la brillance de la source lumineuse représentée par le segment de diffusion arrière 26, ou en augmentant la surface apparente grâce aux segments 42 et 34.

Selon une variante non représentée de chacun des modes de réalisation, les segments de diffusions 26, 34 et 42 ainsi que les réflecteurs qui leurs sont associés peuvent être réalisés sur seulement un ou plusieurs tronçon du guide de lumière 10.

## Revendications

1. Dispositif d'éclairage ou de signalisation, notamment pour véhicule automobile, qui comprend :
- un guide de lumière (10) dont au moins un tronçon est engendré par le déplacement d'une section élémentaire (16) transversale verticale globalement circulaire selon une ligne directrice (18), le contour (20) de la section élémentaire (16) comprenant une portion périphérique avant d'éclairage (22) et une portion périphérique arrière (24) qui comporte un segment arrière de diffusion de la lumière (26), la section élémentaire (16) comportant un axe optique principal (28) de direction transversale (T) qui s'étend d'arrière en avant depuis le segment de diffusion (26) jusqu'à la portion périphérique avant (22) ;
- et une source lumineuse (30) émettant des rayons lumineux (Rc) qui pénètrent dans le guide de lumière (10) par au moins une face d'extrémité (14) de façon à être canalisés par le guide de lumière (10) ;
du type dans lequel les rayons lumineux canalisés (Rc) se propagent dans le guide de lumière (10) par réflexions totales successives selon la direction générale de la ligne directrice (18), et dans lequel les rayons lumineux canalisés (Rc) atteignant le segment arrière de diffusion (26) sont diffusés, les rayons (Rd) diffusés vers l'arrière émergeant à l'extérieur du tronçon, et les rayons (Re) diffusés vers l'intérieur du guide (10) compris dans un angle solide déterminé autour de l'axe optique principal (28) étant réfractés à travers la portion avant d'éclairage du tronçon,
- au moins un réflecteur (32, 38, 40, 44) qui redirige vers l'avant les rayons lumineux (Rd, Rd", Re', Re") qui émergent de la section élémentaire (16) par sa portion périphérique arrière (24), **caractérisé en ce qu'**il comporte un réflecteur arrière (32) qui est situé en regard du segment arrière de diffusion (26) suivant l'axe optique principal (28) et qui réfléchit vers l'intérieur de la section élémentaire (16) les rayons (Rd) diffusés vers l'arrière de façon qu'ils soient réfractés à travers la portion périphérique avant (22).

2. Dispositif selon la revendication précédente, **caractérisé en ce que** dans un plan perpendiculaire à la ligne directrice (18), le réflecteur arrière (32) a une forme telle que les rayons (Rr) émis par le segment arrière de diffusion de la lumière (26) qu'il réfléchit, sont réfractés par la section élémentaire (16) de façon à émerger de la portion périphérique avant (22) sensiblement parallèlement à l'axe optique principal (28).

3. Dispositif selon l'une des revendications 1 ou 2, **caractérisé en ce que** le réflecteur arrière (32) réfléchit les rayons (Rd) diffusés vers l'arrière de façon convergente vers le segment arrière de diffusion (26).

4. Dispositif selon la revendication précédente, **caractérisé en ce que** le réflecteur arrière (32) a une section élémentaire transversale verticale en forme d'arc de cercle dont le centre est agencé globalement sur le segment arrière de diffusion (26).

5. Dispositif selon la revendication 3, **caractérisé en ce que** le réflecteur arrière (32) est constitué d'une couche de matière réfléchissante qui recouvre la surface externe du segment arrière de diffusion (26).

6. Dispositif selon la revendication 2 prise en combinaison avec l'une quelconque des revendications 3 à 5, **caractérisé en ce que** la portion périphérique avant (22) forme un dioptre convergent dont le foyer objet est globalement agencé sur le segment arrière de diffusion (26).

7. Dispositif selon l'une quelconque des revendications précédentes, **caractérisé en ce que** la portion périphérique arrière (24) de la section élémentaire (16) comporte un segment latéral supérieur (34) de diffusion de la lumière qui définit un axe optique secondaire (36) s'étendant dans la section élémentaire (16) du guide de lumière (10) depuis le segment latéral supérieur de diffusion (34) vers le bas, et qui diffuse vers le bas à l'intérieur du tronçon et vers le haut à l'extérieur du tronçon les rayons lumineux canalisés (Rc) ;
et **en ce que** le système optique comporte un réflecteur latéral supérieur (38) qui est situé au-dessus de la section élémentaire (16) en regard du segment latéral supérieur de diffusion (34) suivant l'axe optique secondaire (36) de façon à réfléchir les rayons (Rd') diffusés vers le haut par le segment latéral supérieur (34) globalement vers l'avant.

8. Dispositif selon la revendication précédente, **caractérisé en ce que** l'axe optique secondaire (36) est sensiblement vertical et perpendiculaire à l'axe optique principal (28).

9. Dispositif selon l'une quelconque des revendications 7 ou 8, **caractérisé en ce que** le réflecteur latéral supérieur (38) a une forme parabolique dont le foyer objet est agencé sur le segment latéral supérieur de diffusion (34) de façon à réfléchir vers l'avant selon une direction sensiblement parallèle à l'axe optique principal (28) les rayons (Rd') diffusés vers le haut.

10. Dispositif selon l'une quelconque des revendications 7 à 9, **caractérisé en ce qu'**il comporte un réflecteur latéral inférieur (40) qui est situé sous la section élémentaire (16) dans l'alignement de l'axe optique secondaire (36), et qui réfléchit vers l'avant et parallèlement à l'axe optique principal (28) les rayons (Re') qui sont diffusés vers le bas par le segment latéral de diffusion (34) et réfractés par la portion périphérique arrière (24).

11. Dispositif selon la revendication précédente, **caractérisé en ce que** la portion périphérique arrière (24) comporte une partie inférieure en forme de dioptre dont le foyer image correspond sensiblement au segment latéral supérieur (34) de diffusion de façon que les rayons (Re') diffusés vers le bas émergent parallèlement à l'axe optique secondaire (36).

12. Dispositif selon l'une quelconque des revendications 1 à 6, **caractérisé en ce que** la portion périphérique arrière (24) de la section élémentaire (16) comporte un premier segment latéral supérieur de diffusion (34) et un second segment latéral inférieur de diffusion (42), qui définissent un axe optique secondaire (36) s'étendant depuis le premier segment latéral supérieur de diffusion (34) jusqu'au second segment latéral inférieur de diffusion (42) de façon globalement verticale ;
**en ce que** les surfaces externes des premier (34) et second (42) segments latéraux de diffusion sont recouvertes d'une matière réfléchissante de façon que les rayons soient diffusés par les segments latéraux de diffusion (34, 42) selon la direction générale de l'axe optique secondaire (36) vers l'intérieur de la section élémentaire (16) ;
**en ce que** les parties de la portion périphérique (24) opposées à chacun des segments latéraux de diffusion (34, 42) ont la forme de dioptres dont le foyer objet correspond sensiblement au segment latéral de diffusion (34, 42) opposé de façon que les rayons lumineux (Re', Re") émergent du guide de lumière (10) parallèlement à l'axe optique secondaire (36) ;
et **en ce que** le dispositif comporte deux réflecteurs latéraux (40, 44) qui sont situés respectivement au-dessous et au-dessus de la section élémentaire (16) en regard des segments latéraux (34, 42), et qui réfléchissent lesdits rayons lumineux émergents (Re', Re") globalement vers l'avant.

## Claims

1. Lighting or signalling device, in particular for a motor vehicle, which comprises:
- a light guide (10) at least one portion of which is generated by the movement of a roughly circular vertical transverse elementary section (16) along a director line (18), the contour (20) of the elementary section (16) comprising a front peripheral lighting portion (22) and a rear peripheral portion (24) which comprises a rear light-diffusion segment (26), the elementary section (16) comprising a principal optical axis (28) with a transverse direction (T) which extends from rear to front from the diffusion segment (26) as far as the front peripheral portion (22);
- and a light source (30) emitting light rays (Rc) which enter the light guide (10) through at least one end face (14) so as to be channelled by the light guide (10);
of the type in which the channelled light rays (Rc) propagate in the light guide (10) by successive total reflections in the general direction of the reflector line (18), and in which the channelled light rays (Rc) reaching the rear diffusion segment (26) are diffused, the rays (Rd) diffused towards the rear emerging outside the length, and the rays (Re) diffused towards the inside of the guide (10) included in a given solid angle around the principal optical axis (28) being refracted through the front lighting portion of the length,
- at least one reflector (32, 38, 40, 44) which redirects forward the light rays (Rd, Rd", Re', Re") which emerge from the elementary section (16) through its rear peripheral portion (24), **characterised in that** it comprises a rear reflector (32) which is situated opposite the rear diffusion segment (26) along the principal optical axis (28) and reflects towards the inside of the elementary section (16) the rays (Rd) diffused towards the rear so that they are refracted through the front peripheral portion (22).

2. Device according to the preceding claim, **characterised in that,** in a plane perpendicular to the director line (18), the rear reflector (32) has a shape such that the rays (Rr) emitted by the rear light-diffusing segment (26) which it reflects are refracted by the elementary section (16) so as to emerge from the front peripheral portion (22) substantially parallel to the principal optical axis (28).

3. Device according to one of Claims 1 or 2, **characterised in that** the rear reflector (32) reflects the rays (Rd) diffused towards the rear in a convergent fashion towards the rear diffusion segment (26).

4. Device according to the preceding claim, **characterised in that** the rear reflector (32) has a vertical transverse elementary section in the form of an arc of a circle whose centre is arranged globally on the rear diffusion segment (26).

5. Device according to Claim 3, **characterised in that** the rear reflector (32) consists of a layer of reflective material which covers the external surface of the rear diffusion segment (26).

6. Device according to Claim 2 taken in combination with any one of Claims 3 to 5, **characterised in that** the front peripheral portion (22) forms a convergent lens whose object focus is approximately arranged on the rear diffusion segment (26).

7. Device according to any one of the preceding claims, **characterised in that** the rear peripheral portion (24) of the elementary section (16) comprises a top lateral light-diffusion segment (34) which defines a secondary optical axis (36) extending in the elementary section (16) of the light guide (10) from the top lateral diffusion segment (34) downwards, and which diffuses the channelled light rays (Rc) downwards inside the length and upwards outside the length;
and **in that** the optical system comprises a top lateral reflector (38) which is situated above the elementary section (16) opposite the top lateral diffusion segment (34) along the secondary optical axis (36) so as to reflect the rays (Rd') diffused upwards by the top lateral segment (34) roughly forwards.

8. Device according to the preceding claim, **characterised in that** the secondary optical axis (36) is substantially vertical and perpendicular to the principal optical axis (28).

9. Device according to either one of Claims 7 or 8, **characterised in that** the top lateral reflector (38) has a parabolic shape whose object focus is arranged on the top lateral diffusion segment (34) so as to reflect forwards, in a direction substantially parallel to the principal optical axis (28), the rays (Rd') diffused upwards.

10. Device according to any one of Claims 7 to 9, **characterised in that** it comprises a bottom lateral reflector (40) which is situated under the elementary section (16) in line with the secondary optical axis (36) and which reflects, forwards and parallel to the principal optical axis (28), the rays (Re') which are diffused downwards by the lateral diffusion segment (34) and refracted by the rear peripheral portion (24).

11. Device according to the preceding claim, **characterised in that** the rear peripheral portion (24) comprises a bottom part in the form of a lens whose image focus corresponds substantially to the top lateral diffusion segment (34) so that the rays (Re') diffused downwards emerge parallel to the secondary optical axis (36).

12. Device according to any one of Claims 1 to 6, **characterised in that** the rear peripheral portion (24) of the elementary section (16) comprises a first top lateral diffusion segment (34) and a second bottom lateral diffusion segment (42) which define a secondary optical axis (36) extending from the first top lateral diffusion segment (34) as far as the second bottom lateral diffusion segment (42) in a roughly vertical fashion;
and **in that** the external surfaces of the first (34) and second (42) lateral diffusion segments are covered with a reflective material so that the rays are diffused by the lateral diffusion segments (34, 42) in the general direction of the secondary optical axis (36) towards the inside of the elementary section (16);
**in that** the parts of the peripheral portion (24) opposite to each of the lateral diffusion segments (34, 42) are in the form of lenses whose object focus corresponds substantially to the opposite lateral diffusion segment (34, 42) so that the light rays (Re', Re") emerge from the light guide (10) parallel to the secondary optical axis (36);
and **in that** the device comprises two lateral reflectors (40, 44) which are situated respectively below and above the elementary section (16) opposite the lateral segments (34, 42) and which reflect the said emerging light rays (Re', Re") roughly towards the front.

## Patentansprüche

1. Beleuchtungs- oder Signalgebungsvorrichtung, insbesondere für Kraftfahrzeuge, mit:
- einem Lichtleiter (10), bei dem wenigstens ein Teilstück durch das Verschieben eines allgemein runden senkrechten quer verlaufenden Grundprofils (16) entlang einer Leitlinie (18) erzeugt wird, wobei der Umfang (20) des Grundprofils (16) ein vorderes Beleuchtungsumfangsstück (22) und ein rückwärtiges Umfangsstück (24) umfasst, das ein rückwärtiges Lichtstreuungssegment (26) aufweist, wobei das Grundprofil (16) eine optische Hauptachse (28) in Querrichtung (T) aufweist, die von hinten nach vorne vom Lichtstreuungssegment (26) bis zum vorderen Umfangsstück (22) verläuft;
- und einer Lichtquelle (30), die Lichtstrahlen (Rc) emittiert, die in den Lichtleiter (10) durch wenigstens eine Stirnfläche (14) solchermaßen eintreten, dass sie durch den Lichtleiter (10) kanalisiert werden;
des Typs, bei dem sich die kanalisierten Lichtstrahlen (Rc) in dem Lichtleiter (10) durch aufeinanderfolgende Totalreflexionen in der allgemeinen Richtung der Leitlinie (18) ausbreiten und bei dem die zu dem rückwärtigen Lichtstreuungssegment (26) gelangenden kanalisierten Lichtstrahlen (Rc) gestreut werden, wobei die nach hinten gestreuten Strahlen (Rd) an der Außenseite des Teilstücks austreten und wobei die in den Lichtleiter (10) nach innen gestreuten, in einem bestimmten Raumwinkel um die optische Hauptachse (28) herum enthaltenen Strahlen (Re) durch das vordere Beleuchtungsstück des Teilstücks hindurch gebrochen werden,
- wenigstens einem Reflektor (32, 38, 40, 44), der die Lichtstrahlen (Rd, Rd", Re', Re"), die an dem Grundprofil (16) durch dessen rückwärtiges Umfangsstück (24) austreten, nach vorne ablenkt, **dadurch gekennzeichnet, dass** sie einen rückwärtigen Reflektor (32) umfasst, der gegenüber dem rückwärtigen Lichtstreuungssegment (26) entlang der optischen Hauptachse (28) angeordnet ist und die nach hinten gestreuten Lichtstrahlen (Rd) solchermaßen ins Innere des Grundprofils (16) reflektiert, dass sie durch das vordere Umfangsstück (22) hindurch gebrochen werden.

2. Vorrichtung nach dem vorhergehenden Anspruch,
**dadurch gekennzeichnet, dass** der rückwärtige Reflektor (32) in einer zur Leitlinie (18) senkrechten Ebene eine solche Form hat, dass die vom rückwärtigen Lichtstreuungssegment (26) emittierten Lichtstrahlen (Rr), die dieser reflektiert, durch das Grundprofil (16) solchermaßen gebrochen werden, dass sie an dem vorderen Umfangsstück (22) im Wesentlichen parallel zur optischen Hauptachse (28) austreten.

3. Vorrichtung nach einem der Ansprüche 1 oder 2,
**dadurch gekennzeichnet, dass** der rückwärtige Reflektor (32) die nach hinten gestreuten Lichtstrahlen (Rd) konvergierend zum rückwärtigen Lichtstreuungssegment (26) reflektiert.

4. Vorrichtung nach dem vorhergehenden Anspruch,
**dadurch gekennzeichnet, dass** der rückwärtige Reflektor (32) ein senkrechtes quer verlaufendes Grundprofil in Form eines Kreisbogens hat, dessen Mittelpunkt allgemein auf dem rückwärtigen Lichtstreuungssegment (26) angeordnet ist.

5. Vorrichtung nach Anspruch 3,
**dadurch gekennzeichnet, dass** der rückwärtige Reflektor (32) von einer Schicht aus reflektierendem Material gebildet ist, welche die äußere Fläche des rückwärtigen Lichtstreuungssegments (26) bedeckt.

6. Vorrichtung nach Anspruch 2 in Verbindung mit einem der Ansprüche 3 bis 5,
**dadurch gekennzeichnet, dass** das vordere Umfangsstück (22) eine dioptrische Konvergenzfläche bildet, deren objektseitiger Brennpunkt allgemein auf dem rückwärtigen Lichtstreuungssegment (26) angeordnet ist.

7. Vorrichtung nach einem der vorhergehenden Ansprüche,
**dadurch gekennzeichnet, dass** das rückwärtige Umfangsstück (24) des Grundprofils (16) ein oberes seitliches Lichtstreuungssegment (34) umfasst, das eine zweite optische Achse (36) bildet, die in dem Grundprofil (16) des Lichtleiters (10) vom oberen seitlichen Lichtstreuungssegment (34) nach unten verläuft, und das die kanalisierten Lichtstrahlen (Rc) nach unten ins Innere des Teilstücks und nach oben zur Außenseite des Teilstücks streut;
und dass das optische System einen oberen seitlichen Reflektor (38) umfasst, der oberhalb des Grundprofils (16) gegenüber dem oberen seitlichen Lichtstreuungssegment (34) entlang der zweiten optischen Achse (36) solchermaßen angeordnet ist, dass die von dem oberen seitlichen Segment (34) nach oben gestreuten Lichtstrahlen (Rd') allgemein nach vorne reflektiert werden.

8. Vorrichtung nach dem vorhergehenden Anspruch,
**dadurch gekennzeichnet, dass** die zweite optische Achse (36) im Wesentlichen senkrecht und zur optischen Hauptachse (28) lotrecht ist.

9. Vorrichtung nach einem der Ansprüche 7 oder 8,
**dadurch gekennzeichnet, dass** der obere seitliche Reflektor (38) eine parabolische Form hat, dessen objektseitiger Brennpunkt auf dem oberen seitlichen Lichtstreuungssegment (34) solchermaßen angeordnet ist, dass die nach oben gestreuten Lichtstrahlen (Rd') in einer zur optischen Hauptachse (28) im Wesentlichen parallelen Richtung nach vorne reflektiert werden.

10. Vorrichtung nach einem der Ansprüche 7 bis 9,
**dadurch gekennzeichnet, dass** sie einen unteren seitlichen Reflektor (40) umfasst, der unterhalb des Grundprofils (16) in einer Linie mit der zweiten optischen Achse (36) angeordnet ist und der die Lichtstrahlen (Re'), die durch das seitliche Lichtstreuungssegment (34) nach unten gestreut und durch das rückwärtige Umfangsstück (24) gebrochen werden, nach vorne und parallel zur optischen Hauptachse (28) reflektiert.

11. Vorrichtung nach dem vorhergehenden Anspruch,
**dadurch gekennzeichnet, dass** das rückwärtige Umfangsstück (24) einen unteren Teil in Form einer dioptrischen Fläche aufweist, deren bildseitiger Brennpunkt im Wesentlichen mit dem oberen seitlichen Lichtstreuungssegment (34) solchermaßen korrespondiert, dass die nach unten gestreuten Lichtstrahlen (Re') parallel zur zweiten optischen Achse (36) austreten.

12. Vorrichtung nach einem der Ansprüche 1 bis 6,
**dadurch gekennzeichnet, dass** das rückwärtige Umfangsstück (24) des Grundprofils (16) ein erstes oberes seitliches Lichtstreuungssegment (34) und ein zweites unteres seitliches Lichtstreuungssegment (42) aufweist, die eine zweite optische Achse (36) bilden, die vom ersten oberen seitlichen Lichtstreuungssegment (34) zum zweiten unteren seitlichen Lichtstreuungssegment (42) allgemein senkrecht verläuft;
dass die Außenflächen des ersten (34) und des zweiten (42) seitlichen Lichtstreuungssegments mit einem reflektierenden Material solchermaßen bedeckt sind, dass die Lichtstrahlen von den seitlichen Lichtstreuungssegmenten (34, 42) allgemein in Richtung der zweiten optischen Achse (36) ins Innere des Grundprofils (16) gestreut werden;
dass die Teile des Umfangsstücks (24), die jedem der seitlichen Lichtstreuungssegmente (34, 42) entgegengesetzt sind, die Form von dioptrischen Flächen haben, deren objektseitiger Brennpunkt im Wesentlichen mit dem entgegengesetzten seitlichen Lichtstreuungssegment (34, 42) solchermaßen korrespondiert, dass die Lichtstrahlen (Re', Re") aus dem Lichtleiter (10) parallel zur zweiten optischen Achse (36) austreten;
und dass die Vorrichtung zwei seitliche Reflektoren (40, 44) umfasst, die unter- bzw. oberhalb des Grundprofils (16) gegenüber den seitlichen Segmenten (34, 42) angeordnet sind und die die austretenden Lichtstrahlen (Re', Re") allgemein nach vorne reflektieren.
